# EUROPÄISCHE PATENTSCHRIFT

(11) **EP 3 538 366 B1**
(45) Veröffentlichungstag und Bekanntmachung des Hinweises auf die Patenterteilung: **09.12.2026**
(21) Anmeldenummer: 17777531.9
(22) Anmeldetag: 21.09.2017
(51) Int. Cl.: B33Y 10/00, B29C 64/106, B29C 64/209, B29C 64/393, B33Y 50/02

(54) **BESSER KONTROLLIERBARER DRUCKKOPF FÜR 3D-DRUCKER**
PRINT HEAD FOR A 3D PRINTER, WITH IMPROVED CONTROL
TÊTE D'IMPRESSION DE COMMANDE AMÉLIORÉE POUR IMPRIMANTE 3D

(30) Priorität: 14.11.2016 DE 102016222306
(43) Veröffentlichungstag der Anmeldung: 18.09.2019
(73) Patentinhaber: Robert Bosch GmbH, 70442 Stuttgart (DE)
(72) Erfinder: STREICHER, Markus, 70565 Stuttgart (DE); HERBSTER, Sebastian, 39104 Magdeburg (DE); ROMAN, Victor, 70567 Stuttgart (DE); DUEFORMANTEL, Christian, 73730 Esslingen (DE); LUNG, Norman, 71384 Weinstadt (DE); JAHNLE, Hendrik, 71397 Leutenbach (DE)
(86) Internationale Anmeldenummer: PCT/EP2017/073900
(87) Internationale Veröffentlichungsnummer: WO 2018/086792

(56) Entgegenhaltungen:
- WO-A1-2015/023077
- CN-A- 103 876 263
- DE-A1- 102013 114 086
- JP-A- 2015 168 135

## Beschreibung

Die vorliegende Erfindung betrifft einen Druckkopf für 3D-Drucker zur selektiven lokalen Ausgabe der flüssigen Phase eines Ausgangsmaterials.

### Stand der Technik

Ein 3D-Drucker für ein in seiner Viskosität veränderliches Material erhält eine feste Phase dieses Materials als Ausgangsmaterial, erzeugt daraus eine flüssige Phase und bringt diese flüssige Phase selektiv an den Stellen, die zu dem zu erzeugenden Objekt gehören, auf. Ein solcher 3D-Drucker umfasst einen Druckkopf, in dem das Ausgangsmaterial druckfertig aufbereitet wird. Weiterhin sind Mittel zur Erzeugung einer Relativbewegung zwischen dem Druckkopf und der Arbeitsfläche, auf der das Objekt entstehen soll, vorgesehen. Dabei können entweder nur der Druckkopf, nur die Arbeitsfläche oder aber sowohl der Druckkopf als auch die Arbeitsfläche bewegt werden.

Der Druckkopf hat einen ersten Betriebszustand, in dem flüssiges Material aus ihm austritt, und einen zweiten Betriebszustand, in dem kein flüssiges Material aus ihm austritt. Der zweite Betriebszustand wird beispielsweise dann eingenommen, wenn eine andere Position auf der Arbeitsfläche angefahren werden und auf dem Weg dorthin kein Material deponiert werden soll. Zwischen den beiden Betriebszuständen des Druckkopfes kann beispielsweise umgeschaltet werden, indem der Vortrieb des festen Ausgangsmaterials ein- bzw. ausgeschaltet wird.

Am verbreitetsten ist das "fused deposition modeling" (FDM), bei dem ein Filament aus dem Ausgangsmaterial in einer elektrisch beheizten Extruderdüse aufgeschmolzen und schichtweise auf eine Plattform aufgebracht wird. In Form eines derartigen Filaments ist das Ausgangsmaterial sehr teuer. In der US 2016/082 627 A1 wird vorgeschlagen, das Ausgangsmaterial in Granulatform zuzuführen und mit einer Förderschnecke zu einer beheizten Zone zu fördern, aus der es in plastifizierter Form austritt. Zum Einen ist Granulat deutlich günstiger, und zum Anderen können Mischungen aus verschiedenen thermoplastischen Materialien auf diese Weise einfach hergestellt werden.

Die CN 103 876 263 A offenbart einen Druckkopf für einen 3D-Drucker, umfassend eine Einzugszone mit einer Zuführung für ein Ausgangsmaterial. Zur Erhitzung des Materials ist eine Heizvorrichtung vorgesehen.

Die WO 2015/023077 A1 offenbart einen Druckkopf mit einer Zuführeinrichtung für ein Ausgangsmaterial.

Die JP 2015 168135 A offenbart einen Druckkopf, wobei ein Kühlmittel in einer Öffnung eines Schmelzabschnitts angeordnet ist. Des Kühlmittel verhindert, dass ein Epoxidgranulat schmilzt, bevor es in den Schmelzabschnitt eintritt.

### Offenbarung der Erfindung

Im Rahmen der Erfindung wurde ein Druckkopf für einen 3D-Drucker entwickelt. Dieser Druckkopf umfasst eine Einzugszone mit einer Zuführung für ein in seiner Viskosität veränderliches Ausgangsmaterial, eine Plastifizierungszone mit einer Heizung und einer Austrittsöffnung für die flüssige Phase des Ausgangsmaterials sowie eine Fördervorrichtung zur Förderung des Granulats von der Einzugszone in die Plastifizierungszone.

Dabei kann insbesondere eine Zuführung für ein als Granulat vorliegendes Ausgangsmaterial vorgesehen sein. Das Ausgangsmaterial kann insbesondere ein thermoplastisches Material sein.

Die Fördervorrichtung umfasst einen in die Einzugszone einführbaren Kolben.

Es wurde erkannt, dass dadurch sowohl gegenüber Druckköpfen, die Filamente aus thermoplastischem Material verwenden, als auch gegenüber Druckköpfen mit Förderschnecke jeweils spezifische Vorteile erzielt werden. Diese Vorteile kommen insbesondere im Zusammenhang mit einem als Granulat vorliegenden Ausgangsmaterial zum Tragen.

Abgesehen davon, dass Granulat um einen Faktor 5-100 günstiger ist als ein Filament aus dem gleichen Material, hängt die Qualität des gedruckten Objekts davon ab, ob der Durchmesser des Filaments exakt der Spezifikation entspricht. Dieser Durchmesser bestimmt im Zusammenwirken mit den elastischen Eigenschaften des Filaments und der auf das Filament ausgeübten Vorschubkraft den Druck, mit dem die flüssige Phase des Materials letztendlich aus der Austrittsöffnung des Druckkopfes austritt. Schwankungen im Durchmesser können weiterhin zur Folge haben, dass das Filament im Druckkopf verklemmt oder aber der Vorschubmechanismus das Filament nicht mehr greifen kann, so dass der Druckvorgang zum Erliegen kommt.

Weiterhin ist der Austritt des Ausgangsmaterials aus dem Druckkopf nicht immer von jetzt auf gleich unterbindbar, wenn der Druckvorgang an einer Position unterbrochen und nach dem Verfahren des Druckkopfes an eine andere Position wieder aufgenommen werden soll. Es werden mitunter unerwünschte, "Angel Hairs" genannte Fäden gezogen. Ursache hierfür ist, dass ein Stopp des Vorschubmechanismus für das Filament den Druck, der auf der flüssigen Phase des Ausgangsmaterials lastet und dieses aus der Austrittsöffnung treibt, nicht notwendigerweise voll entlastet. Durch den vorherigen Vorschub wurde das Filament unter Druckspannung gesetzt, so dass es auch nach dem Stopp des Vorschubs zunächst weiter auf die Schmelze drückt. Der gemäß der Erfindung vorgesehene Kolben kann hingegen zurückgezogen werden und so den Druck nicht nur vollständig entlasten, sondern im Druckkopf sogar einen Unterdruck erzeugen, der den weiteren Austritt von flüssigem Material unterbindet.

Der konstruktive Aufbau der Fördervorrichtung mit dem Kolben vereinfacht außerdem gegenüber dem bisherigen Aufbau mit der Förderschnecke das Einbringen zusätzlicher Ventile, die die Austrittsöffnung verschließen.

Schließlich sind Ausgangsmaterialien als Granulat in weit mehr Varianten frei verfügbar als in Filamentform. Die Fertigung des Filaments ist eine Veredelung, die teuer ist, der Qualität des Ausgangsmaterials schadet und gar nicht für jedes Material möglich ist. Letzten Endes wird aus dieser Veredelung auch kaum ein Nutzen gezogen, denn sie ist dahin, sobald das Ausgangsmaterial aufgeschmolzen ist. Daher ist es sinnvoll, diese Veredlung von vornherein wegzulassen und Granulat als Ausgangsmaterial zu verwenden.

Im Vergleich zu einem Druckkopf, der Granulat mit einer Förderschnecke transportiert, lässt sich der Druckkopf gemäß der Erfindung kompakter bauen. Dies wiederum hat zur Folge, dass der Druckkopf leichter und einfacher bewegbar ist. Dies ist insbesondere dann von Vorteil, wenn der Druckkopf sehr schnell, insbesondere mit Geschwindigkeiten von 100 mm/s oder mehr, bewegt werden soll.

Weiterhin wurde überraschenderweise erkannt, dass die Förderung des Ausgangsmaterials mit dem Kolben die Qualität des Materials besser erhält als die Förderung mit einer Förderschnecke.

Zum Einen kann die Zeitdauer, für die das Material oberhalb seiner Schmelztemperatur verweilt, deutlich reduziert werden, so dass es in geringerem Maße thermisch degeneriert. Durch eine zu hohe thermische Belastung entstehen Spaltprodukte, in erster Linie Gase, welche durch die im System vorherrschenden Drücke eine weitere Zersetzung des Materials beschleunigen und auch direkt dessen Qualität beeinflussen. Dies äußert sich beispielsweise in Schwankungen des extrudierten Volumens oder auch durch eine Verfärbung, oberflächliche Verbrennung oder ein Schäumen des extrudierten Materials. Des Weiteren bilden sich Beläge im System, welche sich lösen und das System verstopfen oder als lose Partikel in das herzustellende Objekt gelangen. Durch den Druck gasförmiger Spaltprodukte kann weiterhin auch ungewollt Material extrudiert werden. Ist die Austrittsöffnung durch ein Ventil verschlossen, kann sich hier sogar ein Überdruck aufbauen und der Druckkopf explodieren. Ist die Austrittsöffnung durch feste Spaltprodukte verschlossen, kann sich ebenfalls ein Druck im Druckkopf aufbauen, der sich in einer explosionsartigen Extrusion heißen Materials entladen kann. Auf Grund der Nachwärme kann dies auch dann noch passieren, wenn durch ein Sicherheitssystem die Energiezufuhr zur Heizung des Druckkopfes bereits abgeschaltet wurde.

Zum Anderen werden auch keine Scherkräfte auf das Material ausgeübt, die Polymerketten des Materials zerteilen. Je länger diese Polymerketten sind, desto größer ist die mechanische Festigkeit des letztendlich erhaltenen Objekts gegenüber beispielsweise Zug- Druck- und Biegebeanspruchungen. Auch die Beständigkeit des Objekts gegen chemische Medien ist umso besser, je länger die Polymerketten sind.

Weiterhin können beliebig kleine Volumina plastifiziert werden, wohingegen bei der Förderung mit einer Förderschnecke immer eine gewisse Mindestmenge an Material plastifiziert werden muss. Eine Förderschnecke benötigt eine derartige Mindestmenge, um die Schubkräfte aufzubauen, die für die Funktion der Förderschnecke zwingend erforderlich sind.

Wenn der Kolben auf das Granulat drückt, so wird dieses verdichtet und zur Plastifizierungszone gefördert. Dabei ist die in der Schüttung des Granulats enthaltene Umgebungsluft abzuführen. Dies kann zum Einen durch den Spalt erfolgen, mit dem der Kolben im Druckkopf geführt ist. Die Abmessungen dieses Spalts sind nicht kritisch. Der Spalt muss lediglich schmal genug sein, dass keine Körner des Granulats in ihn eindringen und sich dort verkanten können. Zum Anderen können alternativ oder in Kombination auch an anderer Stelle eine oder mehrere Entlüftungsöffnungen vorgesehen sein.

Dass die Abmessungen des Spalts nicht kritisch sind, liegt an der Trennung zwischen Einzugszone und Plastifizierungszone. Würde der Kolben unmittelbar in die flüssige Phase des Ausgangsmaterials eintauchen, wäre die Dichtung sehr komplex.

Wird der Kolben druckentlastet, wozu bereits ein Zurückweichen um wenige 1/10 mm genügt, so wird der Austritt von Ausgangsmaterial aus der Austrittsöffnung unmittelbar gestoppt. Wird der Kolben zusätzlich hinter die Zuführung für das Granulat zurückgezogen, wird ein Raum eröffnet, in den frisches Granulat aus der Zuführung nachrieseln kann. Somit wechseln sich der Austritt von Material aus der Austrittsöffnung und das Nachfüllen von Granulat zyklisch ab. Im Gegensatz zur Förderung mit der Förderschnecke ist es somit nicht möglich, kontinuierlich Material aus der Austrittsöffnung austreten zu lassen. Die Erfinder haben erkannt, dass die vorgenannten Vorteile diesen scheinbaren Nachteil überkompensieren. Die Unterbrechung des Materialaustritts durch das Zurückziehen des Kolbens und den erneuten Druckaufbau ist so kurz, dass sie sich im fertigen Objekt nicht als Fehlstelle, bzw. als Festigkeits- oder Qualitätsmangel, niederschlägt. Durch einen zweiten Druckkopf kann auch diese kurzfristige Unterbrechung überbrückt werden.

Es sind Mittel vorgesehen, um die Temperatur T_{S} der Einzugszone auch dann unterhalb der Temperatur T_{P} zu halten, ab der das Ausgangsmaterial plastifiziert, wenn die flüssige Phase des Ausgangsmaterials aus der Austrittsöffnung austritt. Dies ist gleichbedeutend damit, dass der Kolben ausschließlich mit der festen Phase des Ausgangsmaterials in Berührung kommt und nicht mit einer plastifizierten Phase. Die plastifizierte Phase hat eine zähe, klebrige Konsistenz mit einer hohen Neigung zur Oberflächenadhäsion. Wenn der Kolben mit dieser Phase in Berührung kommt, kann er damit verkleben, wodurch beispielsweise das Nachrieseln von frischem Granulat beim Zurückziehen des Kolbens behindert wird.

Um die Temperatur Ts in der Einzugszone unterhalb von T_{P} zu halten, ist eine Kühlung der Einzugszone vorgesehen, wobei erfindungsgemäß Kühlmittel vorgesehen sind, die eine aktive Kühlung mit einem Kühlmedium und eine passive Kühlung mit Kühlrippen umfassen. Auch eine solche Kühlung ist im Vergleich zum Stand der Technik, in dem es nur auf das Aufheizen des Ausgangsmaterials ankommt, kontra-intuitiv. In Kombination zu einer aktiven Kühlung kann die Temperatur Ts in der Einzugszone auch beispielsweise durch eine thermische Isolierung gegen die Plastifizierungszone, und/oder durch eine Beabstandung der Einzugszone von der Plastifizierungszone, kontrolliert werden.

In einer besonders vorteilhaften Ausgestaltung der Erfindung ist die Antriebsquelle für den Kolben dazu ausgebildet, in dem Ausgangsmaterial einen Druck p von 1000 bar oder mehr, bevorzugt von 1500 bar oder mehr, zu erzeugen**.** Auf diese Weise kann auch die flüssige Phase eines hoch viskosen Ausgangsmaterials durch deutlich kleinere Austrittsöffnungen hindurch gedrückt werden, so dass die Auflösung filigraner gedruckter Strukturen deutlich verbessert werden kann.

Alternativ ist vorteilhaft die Antriebsquelle für den Kolben dazu ausgebildet, in dem Ausgangsmaterial einen Druck p zwischen 350 bar und 750 bar zu erzeugen. In diesem Druckbereich lässt sich eine hinreichend große Klasse von Kunststoffen als Ausgangsmaterialien verarbeiten bei vergleichsweise moderatem apparativem Aufwand.

Beim 3D-Druck mit einem Filament als Ausgangsmaterial wird der Druck, der das flüssige Material aus der Austrittsöffnung des Druckkopfes treibt, durch den Vorschub des Filaments erzeugt. Der maximal erreichbare Druck ist somit prinzipbedingt vergleichweise gering. Er liegt in der Größenordnung 60-70 bar. Bei höheren Drücken fließt geschmolzenes Material in rückwärtiger Richtung am Filament vorbei und tritt somit an der falschen Stelle aus dem Druckkopf aus. Daher können aktuell im kommerziellen Maßstab Düsendurchmesser, und damit laterale Strukturauflösungen, ab etwa 0,4 mm verwendet werden. Gegenstand der Forschung ist derzeit, diese Grenze auf Werte von 0,2 mm oder weniger zu verbessern. Manche Kunststoffe lassen sich auch gar nicht oder nur mit uninteressanten Düsendurchmessern verarbeiten, weil sie auch im flüssigen Zustand zu viskos für den zur Verfügung stehenden Druck sind. Die Genauigkeit der gedruckten Strukturen liegt in der gleichen Größenordnung.

Steht hingegen bedingt durch die Verwendung des Kolbens ein deutlich höherer Druck zur Verfügung, so sind Düsendurchmesser um 0,1 mm verwendbar, und Strukturen können bis auf etwa ± 50 µm genau gedruckt werden. Weiterhin können prinzipiell alle thermoplastischen Materialien, sowie auch gewisse Duroplaste und Elastomere, verwendet werden. Auch niederschmelzende Lote, wie etwa Zinn, oder Materialien mit Füllstoffen jeglicher Art können verwendet werden. Gegebenenfalls sind bei Verwendung dieser Materialien verschiedene Düsendurchmesser nötig. Der Druckkopf funktioniert mit jedem Düsendurchmesser, da die Förderung des Ausgangsmaterials mit dem Kolben beliebig skalierbar ist. Die Skalierung ist lediglich an das konkrete Material anzupassen.

Die Antriebsquelle für den Kolben kann beispielsweise ein Elektromotor mit einer mechanischen Übersetzung, etwa durch eine mechanische Spindel, sein. Bei einer solchen Übersetzung geht eine Kraft- und damit Druckverstärkung mit einer Wegverlängerung einher, so dass der Druckaufbau entsprechend länger dauert und der Druckkopf durch die niedrigere Kraftdichte schwerer wird. Alternativ kann die Antriebsquelle eine hydraulische Druckquelle, und hier insbesondere eine servohydraulische Druckquelle, sein. Hier geschieht die Übersetzung über Flächenverhältnisse von Wirkflächen.

In einer weiteren besonders vorteilhaften Ausgestaltung der Erfindung ist ein Wegmesssystem für die Position s des Kolbens, und/oder ein Sensor für die vom Kolben auf das Granulat ausgeübte Kraft F oder für einen auf den Kolben ausgeübten Hydraulikdruck p_{H}, vorgesehen. Der Vorschub des Kolbens ist ein Maß für die Menge Q an Ausgangsmaterial, die aus der Austrittsöffnung austritt. Diese Menge kann über das Wegmesssystem kontrolliert werden. Weiterhin ist die Kraft F unmittelbar mit dem Druck in dem Ausgangsmaterial korreliert.

In einer weiteren besonders vorteilhaften Ausgestaltung der Erfindung ist in dem Druckkopf, und/oder in dem den Druckkopf enthaltenden 3D-Drucker, eine aktive Regelung für die Antriebsquelle des Kolbens vorgesehen, die dazu ausgebildet ist, die vom Kolben auf das Granulat ausgeübte Kraft F auf einen vorgegebenen Sollwert F_{S} zu regeln. Dadurch kann der Druck in dem Ausgangsmaterial auf einem vorgegebenen Wert gehalten werden. Insbesondere kann es auf diese Weise automatisch ausgeglichen werden, wenn Umgebungsluft aus der Schüttung des Granulats entweicht und diese Schüttung somit kompaktiert wird. Der Vorschub des Kolbens kann insbesondere durch eine Prozessregelung weg- und kraftabhängig im µm-Bereich geregelt werden.

In einer weiteren besonders vorteilhaften Ausgestaltung der Erfindung ist im Bereich der Austrittsöffnung ein Drucksensor für den Druck p_{L}, und/oder ein Temperatursensor für die Temperatur T_{L} der flüssigen Phase des Ausgangsmaterials, angeordnet. Der Druck p_{L} ist der primäre Parameter, der über den Massenstrom Q an Ausgangsmaterial aus der Austrittsöffnung entscheidet. Eine zusätzliche Messung der Temperatur T_{L} ermöglicht es, bei der Bestimmung des Massenstroms Q auch die Temperaturabhängigkeit der Viskosität des Ausgangsmaterials zu berücksichtigen. Durch den Kolbenvorschub kann die zu dosierende Menge Q exakt geregelt werden. Für die Qualität des hergestellten Objekts ist die Kontrolle der Temperatur T_{L}, insbesondere in Form einer konstanten und genauen Regelung, sogar wichtiger, um eine thermische Degradation des Ausgangsmaterials zu vermeiden. Insofern kann beispielsweise der Drucksensor bei einer günstigen Variante des Druckkopfes entfallen.

In einer weiteren besonders vorteilhaften Ausgestaltung der Erfindung ist eine Auswerteeinheit vorgesehen, die dazu ausgebildet ist, aus dem Druck p_{L}, und/oder der Temperatur T_{L}, eine Volumenzunahme ΔV₊ der flüssigen Phase des Ausgangsmaterials bei Entspannung durch die Austrittsöffnung auszuwerten. Die Erfinder haben erkannt, dass es für die Genauigkeit der auf das herzustellende Objekt aufgebrachten Strukturen nicht maßgeblich ist, was genau an Material die Austrittsöffnung verlässt. Vielmehr ist maßgeblich, was auf dem herzustellenden Objekt ankommt. Da die Erfindung es ermöglicht, das Ausgangsmaterial mit wesentlich höheren Drücken durch kleine Austrittsöffnungen zu treiben als dies nach dem bisherigen Stand der Technik möglich war, wird die Volumenzunahme ΔV₊ durch die Entspannung dieser hohen Drücke zu einem für die tatsächlich hergestellte Strukturgröße relevanten Effekt. Beispielsweise kann auf Veranlassung der Auswerteeinheit der Kolbenvorschub um einen Betrag vermindert werden, der zu der Volumenzunahme ΔV₊ korrespondiert. Auf diese Weise kann beispielsweise auf dem herzustellenden Objekt ein Strang aus Ausgangsmaterial abgelegt werden, der 100 µm ± 5 µm Durchmesser aufweist.

In einer weiteren vorteilhaften Ausgestaltung der Erfindung ist die Auswerteeinheit zusätzlich dazu ausgebildet, aus der Temperatur T_{L} eine Volumenschwindung ΔV₋ der flüssigen Phase des Ausgangsmaterials beim Erstarren nach dem Austritt aus der Austrittsöffnung auszuwerten. So kann beispielsweise auf dem Objekt ein Strang aus Ausgangsmaterial abgelegt werden, der zunächst einen Durchmesser von 105 µm hat und beim Erstarren exakt auf den gewünschten Durchmesser von 100 µm schrumpft.

In einer weiteren besonders vorteilhaften Ausgestaltung der Erfindung ist die Auswerteeinheit zusätzlich dazu ausgebildet, den Energiestrom E auszuwerten, den die durch die Austrittsöffnung hindurchtretende flüssige Phase des Ausgangsmaterials transportiert. Auf diese Weise kann der Wärmehaushalt im herzustellenden Objekt insgesamt überwacht werden, so dass weitere Druckstrategien und Bahnbewegungen des Druckkopfes angepasst werden können. Beispielsweise kann es bei der Herstellung eines ausgedehnten Objekts erforderlich sein, den Druckvorgang an einer Position zu unterbrechen und nach dem Verfahren des Druckkopfes an eine andere Position fortzusetzen. Wird der Energiestrom E ausgewertet, so kann beispielsweise erkannt werden, dass die Position, an der der Druckvorgang fortgesetzt werden soll, sich auf Grund thermischer Effekte verschoben hat und entsprechend zu reagieren ist. Hierbei kann insbesondere auch der Energieabfluss aus dem Objekt durch Wärmeleitung und/oder Wärmestrahlung berücksichtigt werden.

In einer weiteren besonders vorteilhaften Ausgestaltung der Erfindung ist die Auswerteeinheit zusätzlich dazu ausgebildet, den durch die Austrittsöffnung hindurchtretenden Massenstrom Q des Ausgangsmaterials unter Berücksichtigung der Position s des Kolbens, und/oder aus der vom Kolben ausgeübten Kraft F, auszuwerten. Auf diese Weise kann die Genauigkeit der Dosierung, und insbesondere der auf dem Objekt hergestellten Strukturgrößen, noch weiter verbessert werden.

Damit die von den Sensoren gemessenen, bzw. von der Auswerteeinheit ausgewerteten, Größen sich letzten Endes in einer präziseren Fertigung von Strukturen des herzustellenden Objekts niederschlagen, können diese Größen insbesondere in eine aktive Prozessregelung zurückgekoppelt sein.

Durch eine Qualifizierung und Charakterisierung von Materialien auf dem Druckkopf kann ggfs. ein Parametersatz erstellt werden, der es ermöglicht, Strukturen mit hoher Genauigkeit auch rein gesteuert, d.h. ohne aktive Rückkopplung, herzustellen.

Die beschriebenen Geometrien, Temperaturen und sonstigen Werte sind beliebig auf verschiedene Materialien bzw. Materialgruppen skalierbar.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
- Figur 1: Ausführungsbeispiel eines Druckkopfes 10 gemäß der Erfindung;
- Figur 2: Schnittzeichnung des Druckkopfes 10 im druckenden Zustand;
- Figur 3: Schnittzeichnung des Druckkopfes 10 im nicht druckenden Zustand;
- Figur 4: Ausführungsbeispiel für einen 3D-Drucker mit dem Druckkopf 10.

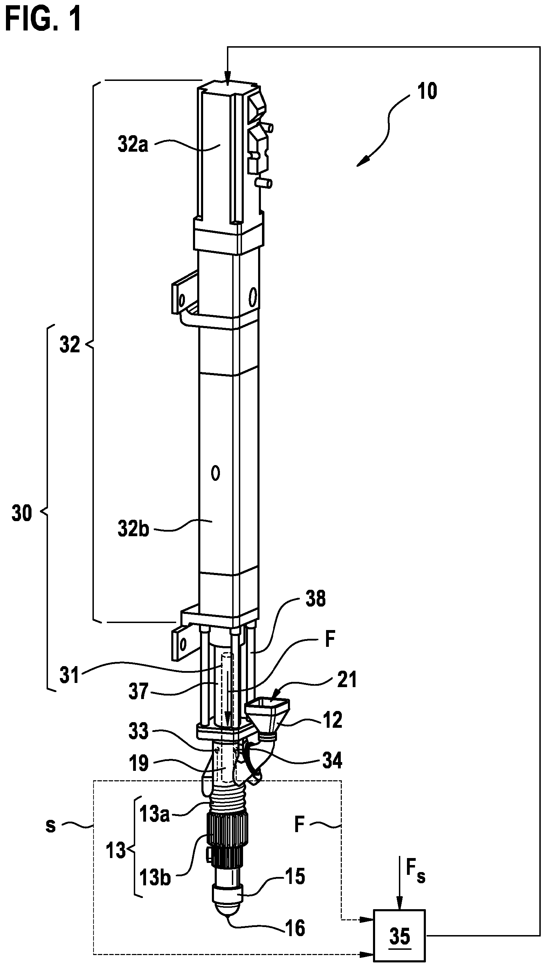

Figur 1 zeigt ein Ausführungsbeispiel des Druckkopfes 10 in perspektivischer Außenansicht. Das Gehäuse 19 des Druckkopfes 10, welches eine trichterförmige Zuführung 12 für das Granulat 21 des Ausgangsmaterials 20 aufweist, geht nach oben hin in ein Zwischenstück 38 über. Dieses Zwischenstück 38 umfasst einen Zylinder 37, in der der Kolben 31 geführt ist. Der Kolben 31 ist in der in Figur 1 gewählten Perspektive durch den Zylinder 37 verdeckt und daher nur angedeutet. Die Bewegung des Kolbens 31 wird über einen Elektromotor 32a, dessen Drehbewegung durch eine mechanische Spindel 32b in eine Linearbewegung übersetzt ist, angetrieben. Kolben 31 und Antriebsquelle 32 bilden gemeinsam die Fördervorrichtung 30 zur Förderung des Granulats 21.

Der Weg s des Kolbens 31 wird mit einem Wegmesssystem 33 gemessen. Die Kraft F, mit der der Kolben 31 auf das Granulat 21 drückt, wird mit einem Kraftsensor 34 gemessen. Die Kraft F und der Weg s werden einer aktiven Regelung 35 zugeführt, die weiterhin einen Sollwert F_{S} für die Kraft F als Eingabe erhält und den Elektromotor 32a dahingehend ansteuert, dass die tatsächliche Kraft F in Übereinstimmung mit dem Sollwert F_{S} gehalten wird. Dabei wird durch die Messung des Weges s die Einhaltung der Randbedingung sichergestellt, dass der Kolben 31 nur mit dem vollständig festen Granulat 21 des Ausgangsmaterials 20 in Berührung kommen soll, nicht jedoch mit einer zumindest teilweise plastifizierten Phase, die den Kolben 31 verklebt.

Im oberen Bereich, der der Zuführung 12 zugewandt ist, ist das Gehäuse 19 durch Kühlmittel 13 gebildet, die eine aktive Kühlung 13a mit einem Kühlmedium und eine passive Kühlung 13b mit Kühlrippen umfassen. Im unteren Bereich, der der Austrittsöffnung 16 zugewandt ist, ist das Gehäuse 16 hingegen an seinem Außenumfang von einem Heizband 15 umgeben, das die Heizenergie für die Plastifizierung des Ausgangsmaterials 20 bereitstellt.

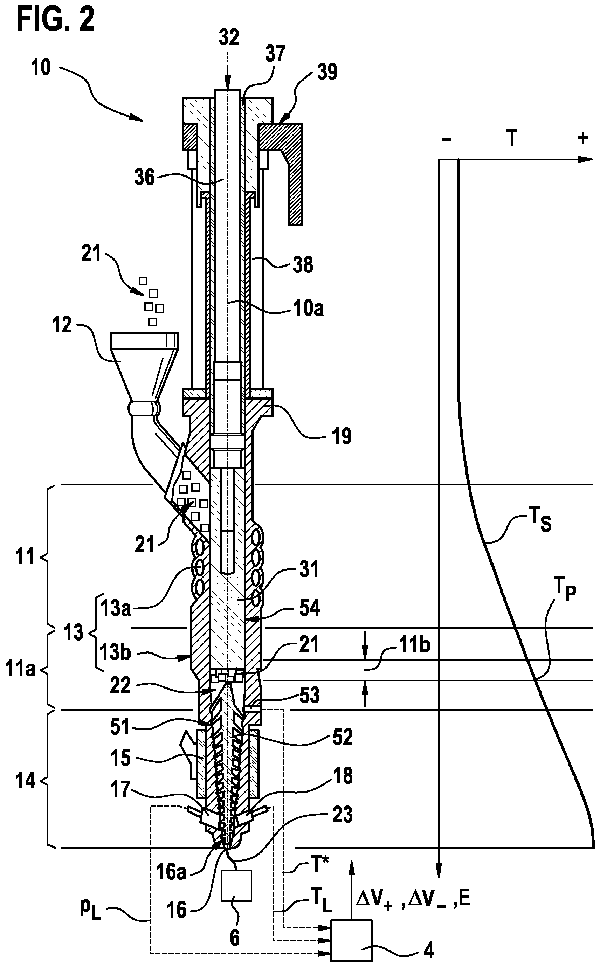

Figur 2 zeigt das Innere des Druckkopfes 10 in dem Teil des Arbeitszyklus, in dem gedruckt wird. Im Gehäuse 19 des Druckkopfes 10 befindet sich eine Einzugszone 11, in die über die trichterförmige Zuführung 12 das Granulat 21 des Ausgangsmaterials 20 zuführbar ist. Der Kolben 31 fördert das Granulat 21 aus der Einzugszone 11 in die Plastifizierungszone 14, auch Meteringzone genannt, weil dort das portionsweise Abmessen des Materials 20 stattfindet. Die Einzugszone 11 grenzt über eine Kompressionszone 11a an die Plastifizierungszone 14. Innerhalb der Kompressionszone 11a findet befindet sich die Grenzschicht 11b zwischen stark komprimiertem, aber immer noch festem und nicht klebrigem Granulat 21 einerseits und Material 20, dessen Verflüssigung begonnen hat, andererseits. In der in Figur 2 gezeigten Stellung befindet sich das vordere Ende des Kolbens 31 genau in dieser Grenzschicht 11b.

Der Innenraum des Gehäuses 19 ist im oberen Bereich des Gehäuses 19 bis einschließlich zur Grenzschicht 11b als gerader Kreiszylinder ausgebildet, in dem der Kolben 31 führbar ist. Weiter unten geht der Innenraum in eine Aufschmelzgeometrie 51 über. Diese Aufschmelzgeometrie 51 zeichnet sich zum Einen dadurch aus, dass sich ihr Innenquerschnitt nach unten hin immer weiter verjüngt, so dass sich der Druck der flüssigen Phase 22 immer weiter erhöht.

Zum Anderen weist die Innenwand der Aufschmelzgeometrie 51 eine Strukturierung auf, die eine Durchmischung der flüssigen Phase 22 des Ausgangsmaterials 20 bewirkt. Diese Strukturierung kann beispielsweise rippenförmig sein, wie es in Figur 2 beispielhaft eingezeichnet ist. In der Plastifizierungszone 14 ist am Außenumfang des Gehäuses 19 das Heizband 15 angeordnet, dessen Heizleistung durch eine im Innenraum des Gehäuses 19, also innerhalb der flüssigen Phase 22, angeordnete Wärmeleitstruktur 52 (Wärmeleittorpedo) homogen über die flüssige Phase 22 verteilt wird. An Stelle des in den Figuren 1 und 2 beispielhaft eingezeichneten Heizbandes 15 ist auch jede andere Art der Heizung möglich. Im der Austrittsöffnung 16 am nächsten gelegenen vorderen Bereich 16a der Plastifizierungszone 14 wird der Druck p_{L} der flüssigen Phase 22 mit einem Drucksensor 17 gemessen, und die Temperatur T_{L} der flüssigen Phase 22 wird mit einem Temperatursensor 18 gemessen. Der Bereich 16a ist nur wenige Kubilmillimeter groß, so dass kein überschüssiges Material 20 aufgeschmolzen wird. Die Wärmeleitstruktur 52 sorgt dafür, dass die flüssige Phase 22 des Materials 20 in dem Bereich 26a stets die höchstmögliche Viskosität aufweist, ohne sich zu überhitzen.

Die Messwerte für p_{L} und T_{L} werden an eine Auswerteeinheit 4 weitergeleitet, die zusätzlich den Temperaturmesswert T* eines unmittelbar an der oberen Grenze der Plastifizierungszone 14 angeordneten weiteren Temperatursensors 53 als Eingabe erhält.

Aus der flüssigen Phase 22 des Ausgangsmaterials 20 wird durch den vom Kolben 31 erzeugten Druck p_{L} ein Strang 23 durch die Austrittsöffnung 16 des Druckkopfes 10 getrieben und lagert sich auf dem zu fertigenden Objekt 6 ab. Die Auswerteeinheit 4 berechnet, um welchen Betrag ΔV₊ das Volumen des Strangs 23 einerseits durch die Entspannung vom hohen Druck p_{L} zunimmt und um welchen Betrag ΔV₋ dieses Volumen andererseits durch die Abkühlung von der hohen Temperatur T_{L} abnimmt. Zugleich wird auch der Energieeintrag E in das Objekt 6 durch das angelagerte Material 23 berechnet.

Der Kolben 31 ist im Gehäuse 19 mit einem geringfügigen Entlüftungsspalt 54 geführt. Durch diesen Spalt 54 kann die in der Schüttung des Granulats 21 enthaltene Umgebungsluft, die bei der Kompression dieser Schüttung frei wird, abgeführt werden. Auf dem gleichen Weg können auch Gase, die bei der Plastifizierung bzw. teilweisen Zersetzung des Ausgangsmaterials 20 entstehen, abgeführt werden.

Wie bereits in Figur 1 angedeutet, ist das Gehäuse 19 zwischen der Grenzschicht 11b und der Zuführung 12 durch Kühlmittel 13 gekühlt, die aus der aktiven Kühlung 13a mit einem strömenden Kühlmedium sowie aus der passiven Kühlung 13b mittels Kühlrippen gebildet werden. Dadurch wird die Temperatur T_{S} innerhalb der Einzugszone 11, die von oben nach unten stetig ansteigt, ständig unterhalb der Temperatur T_{P} gehalten, ab der das Ausgangsmaterial 20 plastifiziert. T_{P} wird gerade am unteren Ende der Grenzschicht 11b erreicht. Indem die Einzugszone 11 permanent auf eine geeignete Temperatur temperiert wird, werden ein zu frühes Aufschmelzen des Granulats 21, ein Verstopfen der Einzugszone 11 und ein Wassereintrag durch Kondensation vermieden. Auch regelt diese Temperierung die genaue Lage der Grenzschicht 11b und kann sie insbesondere in einer konstanten Position halten.

Der Kolben 31 wird über die Kolbenstange 36, die in einem Zylinder 37 innerhalb des Zwischenstücks 38 geführt ist, welches wiederum in einer Halterung 39 gehalten wird, von der Antriebsquelle 32 angetrieben.

Der Temperaturverlauf entlang der Längsachse 10a des Druckkopfes 10 von kalt (-) zu warm (+) ist rechts neben dem Druckkopf 10 qualitativ eingezeichnet.

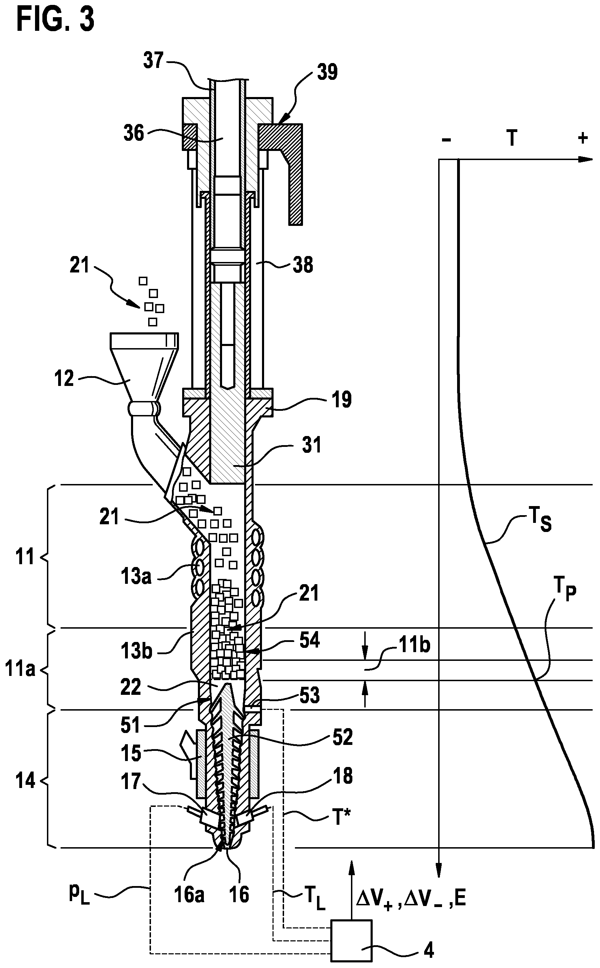

Figur 3 zeigt den gleichen Druckkopf 10 in der gleichen Ansicht wie in Figur 2 mit dem Unterschied, dass hier der Kolben 31 nach oben hinter die Einzugszone 11 zurückgezogen wurde. Dies hat zum Einen den Effekt, dass in dem in Figur 3 gezeigten Zustand kein Strang 23 von Ausgangsmaterial 20 aus der Austrittsöffnung 16 austritt. Zum Anderen ist die Einzugszone 11 frei für das Nachrieseln von frischem Granulat 21. Wenn der Kolben 31 wieder gesenkt wird, wird das frische Granulat 21, wie in Figur 2 gezeigt, komprimiert und in der Plastifizierungszone 14 plastifiziert, bevor es als Strang 23 aus der Austrittsöffnung 16 austritt.

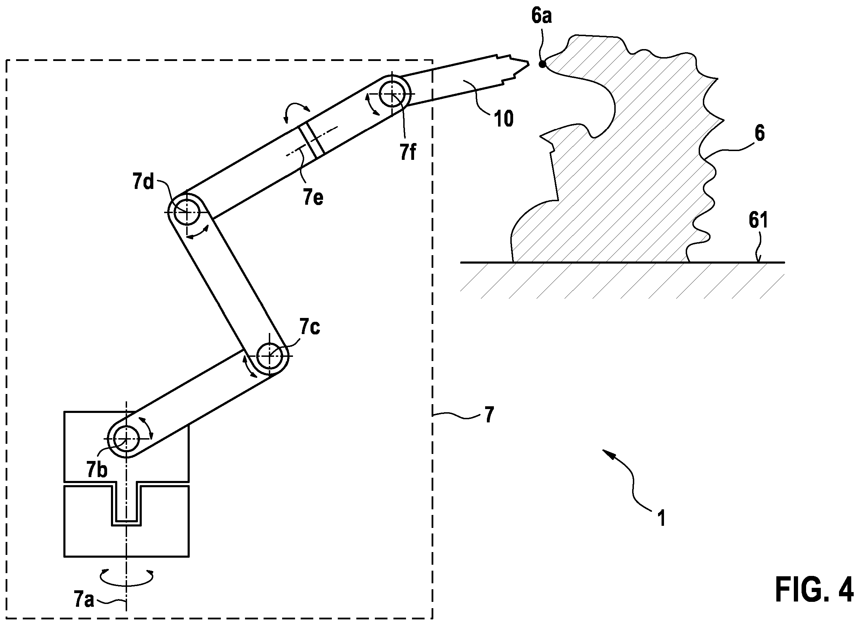

Der Druckkopf 10 kann in beliebige 3D-Drucker 1 integriert werden. Figur 4 zeigt einen beispielhaften 3D-Drucker 1, der den Druckkopf 10 beinhaltet. Der Druckkopf 10 wird von einem Industrieroboter 7 verfahren, der in den jeweils durch Pfeile dargestellten Richtungen um sechs Achsen 7a-7f beweglich ist. Das Objekt 6 ist auf einer Fläche 61 aufzubauen.

Durch den Industrieroboter 7 erhält der Druckkopf 10 nicht nur einen großen Aktionsradius, sondern ist insbesondere auch in der Lage, aus beliebigen Winkeln heraus das Ausgangsmaterial 20 in seiner flüssigen Phase 22 an das herzustellende Objekt 6 anzulagern. Soll in dem in Figur 3 gezeigten Beispiel etwa im beispielhaft eingezeichneten Punkt 102a zusätzliches Material an dem Objekt 102 angelagert werden, so ist das Auftragen aus dem in Figur 3 gezeigten Winkel heraus vorteilhafter als das Auftragen senkrecht von oben, da sich der Punkt 6a an einem Überhang befindet.

In diesem Zusammenhang ist die Förderung des Ausgangsmaterials 20 als Granulat 21 mittels des Kolbens 31 wiederum vorteilhafter als der bei den meisten herkömmlichen 3D-Druckern praktizierte Vorschub als festes Filament. Insbesondere ist der Druckaufbau im Druckkopf 10 lageunabhängiger, und eine Schüttung aus Granulat 21 ist einfacher handhabbar als ein abzurollendes Filament.

## Patentansprüche

1. Druckkopf (10) für einen 3D-Drucker (1), umfassend ein Gehäuse (19) mit einer trichterförmigen Zuführung (12) für ein Granulat (21) eines in seiner Viskosität veränderlichen Ausgangsmaterials (20),_umfassend eine Einzugszone (11) mit der Zuführung (12) für das Ausgangsmaterial (20), eine Plastifizierungszone (14) mit einer Heizung (15) und einer Austrittsöffnung (16) für die flüssige Phase (22) des Ausgangsmaterials (20) sowie eine Fördervorrichtung (30) zur Förderung des Ausgangsmaterials (20) von der Einzugszone (11) in die Plastifizierungszone (14), wobei die Fördervorrichtung (30) einen in die Einzugszone (11) einführbaren Kolben (31) umfasst, wobei Mittel (13) vorgesehen sind, um die Temperatur (T_{S}) der Einzugszone (11) auch dann unterhalb der Temperatur (T_{P}) zu halten, ab der das Ausgangsmaterial (20) plastifiziert, wenn die flüssige Phase (22) des Ausgangsmaterials (20) aus der Austrittsöffnung (16) austritt, wobei eine Kühlung (13) der Einzugszone (11) vorgesehen ist,
**dadurch gekennzeichnet, dass** das Gehäuse (19) in einem oberen, der Zuführung (12) zugewandten Bereich, durch Kühlmittel (13) gebildet ist, wobei die Kühlmittel (13) eine aktive Kühlung (13a) mit einem Kühlmedium und eine passive Kühlung (13b) mit Kühlrippen umfassen.

2. Druckkopf (10) nach Anspruch 1, **dadurch gekennzeichnet, dass** eine Zuführung (12) für ein als Granulat (21) vorliegendes Ausgangsmaterial (20) vorgesehen ist.

3. Druckkopf (10) nach einem der Ansprüche 1 oder 2, **dadurch gekennzeichnet, dass** die Antriebsquelle (32) für den Kolben (31) ein Elektromotor (32a) mit einer mechanischen Übersetzung (32b) oder eine hydraulische Druckquelle (32c) ist.

4. Druckkopf (10) nach einem der Ansprüche 1 bis 3, **dadurch gekennzeichnet, dass** ein Wegmesssystem (33) für die Position s des Kolbens (31), und/oder ein Sensor (34) für die vom Kolben (31) auf das Granulat (21) ausgeübte Kraft F oder für einen auf den Kolben (31) ausgeübten Hydraulikdruck p_{H}, vorgesehen ist.

5. Druckkopf (10) nach Anspruch 4 oder 3D-Drucker (1) mit einem Druckkopf (10) nach Anspruch 4 , **dadurch gekennzeichnet, dass** eine aktive Regelung (35) für die Antriebsquelle (32) des Kolbens (31) vorgesehen ist, die dazu ausgebildet ist, die vom Kolben (31) auf das Granulat (21) ausgeübte Kraft F auf einen vorgegebenen Sollwert F_{S} zu regeln.

6. Druckkopf (10) nach einem der Ansprüche 4 bis 5, **dadurch gekennzeichnet, dass** im Bereich (16a) der Austrittsöffnung (16) ein Drucksensor (17) für den Druck p_{L}, und/oder ein Temperatursensor (18) für die Temperatur T_{L} der flüssigen Phase (22) des Ausgangsmaterials (20), angeordnet ist.

7. Druckkopf (10) nach Anspruch 6-oder 3D-Drucker (1) mit einem Druckkopf (10) nach Anspruch 6, **dadurch gekennzeichnet, dass** eine Auswerteeinheit (4) vorgesehen ist, die dazu ausgebildet ist, aus dem Druck p_{L}, und/oder der Temperatur T_{L}, eine Volumenzunahme ΔV₊ der flüssigen Phase (22) des Ausgangsmaterials (20) bei Entspannung durch die Austrittsöffnung (16) auszuwerten.

8. Druckkopf (10) oder 3D-Drucker (1) nach Anspruch 7, **dadurch gekennzeichnet, dass** die Auswerteeinheit (4) zusätzlich dazu ausgebildet ist, aus der Temperatur T_{L} eine Volumenschwindung ΔV₋ der flüssigen Phase (22) des Ausgangsmaterials (20) beim Erstarren nach dem Austritt aus der Austrittsöffnung (16) auszuwerten.

9. Druckkopf (10) oder 3D-Drucker (1) nach einem der Ansprüche 7 bis 8, **dadurch gekennzeichnet, dass** die Auswerteeinheit (4) zusätzlich dazu ausgebildet ist, den Energiestrom E auszuwerten, den die durch die Austrittsöffnung (16) hindurchtretende (23) flüssige Phase (22) des Ausgangsmaterials (20) transportiert.

10. Druckkopf (10) oder 3D-Drucker (1) nach Anspruch 9 und 4, **dadurch gekennzeichnet, dass** die Auswerteeinheit (4) zusätzlich dazu ausgebildet ist, den durch die Austrittsöffnung (16) hindurchtretenden (23) Massenstrom Q des Ausgangsmaterials (20) unter Berücksichtigung der Position s des Kolbens (31), und/oder aus der vom Kolben (31) ausgeübten Kraft F, auszuwerten.

## Claims

1. Printing head (10) for a 3D printer (1), comprising a housing (19) with a funnel-shaped feed (12) for a granulate (21) of a starting material (20) whose viscosity is variable, comprising a drawing-in zone (11) with the feed (12) for the starting material (20), a plasticizing zone (14) with heating means (15) and with an exit opening (16) for the liquid phase (22) of the starting material (20), and a conveying device (30) for conveying the starting material (20) from the drawing-in zone (11) into the plasticizing zone (14), wherein the conveying device (30) comprises a piston (31) which is introducible into the drawing-in zone (11), wherein means (13) are provided for keeping the temperature (T_{S}) of the drawing-in zone (11) below the temperature (T_{P}), at which the starting material (20) begins to plasticize, even when the liquid phase (22) of the starting material (20) exits from the exit opening (16), wherein cooling means (13) of the drawing-in zone (11) are provided,
**characterized in that**, in an upper region relatively close to the feed (12), the housing (19) is formed by cooling means (13), wherein the cooling means (13) comprise an active cooling means (13a), with a cooling medium, and a passive cooling means (13b), with cooling ribs.

2. Printing head (10) according to Claim 1, **characterized in that** a feed (12) for a starting material (20) provided as granulate (21) is provided.

3. Printing head (10) according to either of Claims 1 and 2, **characterized in that** the drive source (32) for the piston (31) is an electric motor (32a) with a mechanical transmission (32b) or is a hydraulic pressure source (32c).

4. Printing head (10) according to one of Claims 1 to 3, **characterized in that** a travel-measuring system (33) for the position s of the piston (31) and/or a sensor (34) for the force F exerted by the piston (31) on the granulate (21) or for a hydraulic pressure p_{H} exerted on the piston (31) are/is provided.

5. Printing head (10) according to Claim 4 or 3D printer (1) having a printing head (10) according to Claim 4, **characterized in that** an active regulation means (35) is provided for the drive source (32) of the piston (31) and is configured to adjust the force F exerted by the piston (31) on the granulate (21) to a predefined target value F_{S} in a regulated manner.

6. Printing head (10) according to either of Claims 4 and 5, **characterized in that** a pressure sensor (17) for the pressure p_{L} and/or a temperature sensor (18) for the temperature T_{L} of the liquid phase (22) of the starting material (20) are/is arranged in the region (16a) of the exit opening (16).

7. Printing head (10) according to Claim 6 or 3D printer (1) having a printing head (10) according to Claim 6, **characterized in that** an evaluation unit (4) is provided and is configured to determine, from the pressure p_{L} and/or the temperature T_{L}, an increase in volume ΔV₊ of the liquid phase (22) of the starting material (20) upon expansion through the exit opening (16).

8. Printing head (10) or 3D printer (1) according to Claim 7, **characterized in that** the evaluation unit (4) is additionally configured to determine, from the temperature T_{L}, a decrease in volume ΔV₋ of the liquid phase (22) of the starting material (20) upon solidification after exiting from the exit opening (16).

9. Printing head (10) or 3D printer (1) according to either of Claims 7 and 8, **characterized in that** the evaluation unit (4) is additionally configured to determine the energy flow E transported by the liquid phase (22) of the starting material (20) passing (23) through the exit opening (16).

10. Printing head (10) or 3D printer (1) according to Claims 9 and 4, **characterized in that** the evaluation unit (4) is additionally configured to determine the mass flow Q of the starting material (20) passing (23) through the exit opening (16) while taking into account the position s of the piston (31) and/or from the force F exerted by the piston (31).

## Revendications

1. Tête d'impression (10) pour une imprimante 3D (1), comportant un logement (19) pourvu d'une alimentation (12) en forme d'entonnoir pour un granulat (21) d'un matériau de départ (20) variable en viscosité, comportant une zone d'introduction (11) pourvue de l'alimentation (12) pour le matériau de départ (20), une zone de plastification (14) pourvue d'un chauffage (15) et une ouverture de sortie (16) pour la phase liquide (22) du matériau de départ (20) ainsi qu'un dispositif de transport (30) pour le transport du matériau de départ (20) à partir de la zone d'introduction (11) vers la zone de plastification (14), le dispositif de transport (30) comportant un piston (31) pouvant être introduit dans la zone d'introduction (11), des moyens (13) étant prévus pour le maintien de la température (T_{S}) de la zone d'introduction (11) sous la température (T_{P}) à partir de laquelle le matériau de départ (20) se plastifie, également lorsque la phase liquide (22) du matériau de départ (20) sort de l'ouverture de sortie (16), un refroidissement (13) de la zone d'introduction (11) étant prévu, **caractérisée en ce que** le boîtier (19) est formé dans une zone supérieure tournée vers l'alimentation (12) par des réfrigérants (13), les réfrigérants (13) comportant un refroidissement actif (13a) par un milieu réfrigérant et un refroidissement passif (13b) par des ailettes de refroidissement.

2. Tête d'impression (10) selon la revendication 1, **caractérisée en ce qu'**une alimentation (12) pour un matériau de départ (20) se trouvant sous forme de granulat (21) est prévue.

3. Tête d'impression (10) selon l'une des revendications 1 ou 2, **caractérisée en ce que** la source d'entraînement (32) pour le piston (31) est un moteur électrique (32a) pourvu d'une transmission mécanique (32b) ou une source de pression hydraulique (32c).

4. Tête d'impression (10) selon l'une des revendications 1 à 3, **caractérisée en ce qu'**un système de mesure de déplacement (33) pour la position s du piston (31) et/ou un capteur (34) pour la force F exercée par le piston (31) sur le granulat (21) ou pour une pression hydraulique p_{H} exercée sur le piston (31) est/sont prévu(s).

5. Tête d'impression (10) selon la revendication 4 ou imprimante 3D (1) pourvue d'une tête d'impression (10) selon la revendication 4, **caractérisée en ce qu'**une régulation active (35) pour la source d'entraînement (32) du piston (31) est prévue, qui est conçue pour réguler la force F exercée par le piston (31) sur le granulat (21) à une valeur de consigne prédéterminée F_{S}.

6. Tête d'impression (10) selon l'une des revendications 4 à 5, **caractérisée en ce qu'**un capteur de pression (17) pour la pression p_{L} et/ou un capteur de température (18) pour la température T_{L} de la phase liquide (22) du matériau de départ (20) est/sont disposé(s) dans la zone (16a) de l'ouverture de sortie (16).

7. Tête d'impression (10) selon la revendication 6 ou imprimante 3D (1) pourvue d'une tête d'impression (10) selon la revendication 6, **caractérisée en ce qu'**une unité d'évaluation (4) est prévue, qui est conçue pour évaluer, à partir de la pression p_{L} et/ou de la température Tₗ, une augmentation de volume ΔV₊ de la phase liquide (22) du matériau de départ (20) lors de la détente à travers l'ouverture de sortie (16).

8. Tête d'impression (10) ou imprimante 3D (1) selon la revendication 7, **caractérisée en ce que** l'unité d'évaluation (4) est en outre conçue pour évaluer, à partir de la température T_{L}, un retrait volumique ΔV₋ de la phase liquide (22) du matériau de départ (20) lors de la solidification après la sortie de l'ouverture de sortie (16).

9. Tête d'impression (10) ou imprimante 3D (1) selon l'une des revendications 7 à 8, **caractérisée en ce que** l'unité d'évaluation (4) est en outre conçue pour évaluer le flux d'énergie E que transporte la phase liquide (22) du matériau de départ (20) passant (23) à travers l'ouverture de sortie (16).

10. Tête d'impression (10) ou imprimante 3D (1) selon les revendications 9 et 4, **caractérisée en ce que** l'unité d'évaluation (4) est en outre conçue pour évaluer le débit massique Q du matériau de départ (20) passant (23) à travers l'ouverture de sortie (31), compte tenu de la position s du piston (16) et/ou à partir de la force F exercée par le piston (31).
